Europäisches Patentamt

European Patent Office

Office européen des brevets

(11) Numéro de publication: **0 395 491**
**A1**

## (12) DEMANDE DE BREVET EUROPEEN

(21) Numéro de dépôt: 90401100.4

(22) Date de dépôt: 24.04.90

(51) Int. Cl.⁵: **G02B 6/38**

(30) Priorité: 24.04.89 FR 8905420

(43) Date de publication de la demande:
**31.10.90 Bulletin 90/44**

(84) Etats contractants désignés:
**DE ES GB IT NL SE**

(71) Demandeur: **RADIALL Société anonyme dite:**
**101, rue Philibert Hoffmann**
**F-93116 Rosny sous Bois(FR)**

Demandeur: **LEGRAND Société Anonyme:**
**128 Avenue du Maréchal de Lattre de**

**Tassigny**
**F-87011 Limoges(FR)**

(72) Inventeur: **Moreau, Bernard**
**49, Rue Auguste Renoir**
**F-87700 - Aixe sur Vienne(FR)**
Inventeur: **Aitameur, Said**
**20, Rue le la Véga**
**F-75012 - Paris(FR)**

(74) Mandataire: **Nony, Michel et al**
**Cabinet NONY & CIE, 29, rue Cambacérès**
**F-75008 Paris(FR)**

(54) **Dispositif de connexion de fibre optique et boîtier de connexion apte à recevoir un tel dispositif.**

(57) L'invention est relative à un dispositif de connexion de fibre optique comportant un embout mâle dans lequel une fibre optique est immobilisée et un raccord femelle apte à recevoir un autre embout mâle dans lequel une autre fibre optique est immobilisée.

Il comporte un manchon (13) monté autour de l'embout mâle (2), dépassant axialement de l'extrémité frontale (4) de celui-ci et apte à s'engager autour du raccord femelle (7), des moyens (11,12;9) étant prévus pour immobiliser en une position axiale prédéterminée le manchon sur le raccord, ledit manchon (13) se prolongeant vers l'extrémité arrière de l'embout (2) par un capot de manoeuvre (18), monté autour de l'embout et solidaire dudit manchon.

Fig. 1

# Dispositif de connexion de fibre optique et boîtier de connexion apte à recevoir un tel dispositif.

La présente invention est relative à un dispositif de connexion de fibre optique ainsi qu'à un boîtier de connexion apte à recevoir un tel dispositif.

Plus précisément, la présente invention est relative à un dispositif de connexion pour raccorder un élément de connecteur mâle ou embout dans lequel une fibre optique est immobilisée, fixé à l'extrémité d'un câble optique, notamment du type monofibre et un élément de connecteur femelle ou raccord apte à recevoir un autre embout mâle dans lequel une autre fibre optique est immobilisée.

Dans les réseaux câblés à fibres optiques, notamment les réseaux de transmission de données tels que les réseaux informatiques ou les réseaux de télévision, il est nécessaire de pouvoir connecter et déconnecter à volonté un récepteur par rapport au réseau de transmission.

A cet effet, le récepteur est muni, en tant que câble d'alimentation en signaux, d'un câble optique monofibre à l'extrémité duquel est fixé un embout dans lequel est immobilisée la fibre optique du câble.

Cet embout doit pouvoir être connecté et déconnecté à une prise femelle reliée à une source de transmission de données, la prise femelle comportant un raccord pour recevoir l'embout solidaire de l'extrémité du câble, ledit raccord étant muni à son extrémité opposée d'un embout contenant une fibre reliée à la source de transmission de signaux. Les deux fibres sont amenées en regard l'une de l'autre sensiblement au centre du raccord.

La prise femelle est fixe en étant logée dans un boîtier de connexion ou dans un autre appareil.

Pour éviter une pollution par la poussière de la fibre optique placée "en attente" dans la prise femelle, il est souhaitable que le raccord femelle du dispositif de connexion se trouve en retrait de la paroi du boîtier de connexion ou de l'appareil logeant le raccord.

Ceci n'est pas possible avec les dispositifs de connexion de fibre optique connus dans la mesure où la connexion de l'embout mâle disposé à l'extrémité du câble optique devant se faire en aveugle au travers d'une ouverture prévue dans la paroi, il n'est pas possible d'assurer de manière fiable lors d'opérations de connexion et de reconnexion successives un centrage et un positionnement axial de l'embout par rapport au raccord suffisamment précis pour réaliser une connexion en aveugle de bonne qualité.

La présente invention se propose de réaliser un dispositif de connexion permettant précisément d'atteindre cet objectif, et ce, par des moyens particulièrement simples et économiques.

Le dispositif de connexion selon l'invention se caractérise essentiellement par le fait qu'il comprend un manchon, monté autour de l'embout mâle, dépassant axialement de l'extrémité frontale de celui-ci et apte à s'engager autour du raccord femelle, des moyens étant prévus pour immobiliser en une position axiale prédéterminée le manchon sur le raccord, ledit manchon se prolongeant vers l'extrémité arrière de l'embout par un capot de manoeuvre monté autour de l'embout et solidaire dudit manchon, notamment par une liaison séparable, en particulier à baïonnette.

Dans un mode particulier de réalisation, les moyens d'immobilisation sont du type à encliquetage, le manchon comportant sur sa paroi intérieure, de préférence au voisinage de son extrémité frontale, des moyens d'accrochage en saillie vers l'intérieur, tels qu'un bourrelet annulaire ou des crans aptes à s'engager dans une gorge ménagée à la périphérie extérieure du raccord.

De préférence, il est prévu dans ce mode de réalisation un ressort tel qu'un ressort hélicoïdal de compression, disposé de manière à repousser l'embout contenant l'extrémité de la fibre optique à raccorder vers l'intérieur du raccord lorsque le manchon est immobilisé axialement sur ledit raccord. A cet effet le ressort hélicoïdal de compression est en particulier disposé entre une portée frontale du capot arrière et une collerette périphérique de l'embout.

Dans un second mode de réalisation, l'immobilisation axiale du manchon par rapport au raccord s'effectue par l'intermédiaire d'un écrou de verrouillage disposé autour de l'embout, à l'intérieur dudit manchon, ledit écrou étant solidaire en rotation dudit manchon, et comportant, de préférence au voisinage de son extrémité frontale, un filetage interne susceptible de coopérer avec un filetage externe réalisé sur le raccord.

L'écrou comporte avantageusement à sa partie arrière des pattes axiales aptes à s'engager dans des encoches du capot arrière pour solidariser en rotation l'écrou avec le capot et donc avec le manchon.

Bien entendu selon l'invention, il est possible pour les deux modes de réalisation, d'utiliser un même raccord femelle qui peut alors comporter une gorge pour permettre l'immobilisation axiale par encliquetage du manchon dans le premier mode de réalisation et un filetage externe pour recevoir le filetage interne d'un écrou dans le second mode de réalisation.

La présente invention a également pour objet un boîtier de connexion permettant la mise en oeuvre du dispositif décrit précédemment, le boîtier comportant dans une paroi latérale au moins un orifice présentant un diamètre légèrement supérieur au diamètre extérieur du manchon et des moyens pour maintenir un raccord femelle dans le boîtier en regard du ou de chaque orifice à une distance prédéterminée de celui-ci.

Les moyens de maintien peuvent avantageusement être constitués de rainures en regard réalisées dans des montants en saillie de la paroi de fond du boîtier et dans lesquelles est logée une bride, par exemple de section carrée ou rectangulaire, réalisée sur la paroi extérieure du raccord.

Il est avantageusement prévu, au niveau du ou de chaque orifice du boîtier selon l'invention, des moyens d'obturation escamotables lors de l'introduction du manchon du dispositif de connexion, et constitués de préférence chacun de deux volets mobiles transversalement par appui du manchon depuis une position fermée où les deux volets sont au contact l'un de l'autre vers une position ouverte dégageant l'ouverture, les deux volets étant rappelés par des ressorts en direction de leur position fermée.

Afin de favoriser l'introduction du manchon dans l'orifice du boîtier, le manchon est avantageusement pourvu à son extrémité frontale d'un chanfrein d'introduction

Les volets de l'obturateur présentent de préférence chacun sur sa face frontale une surface en rampe agencée de telle manière qu'un déplacement longitudinal du manchon par rapport à la surface frontale provoque un déplacement des volets d'obturateur transversalement par rapport à la direction de déplacement du manchon.

On comprend que le boîtier selon l'invention est particulièrement intéressant dans la mesure où il offre une protection importante vis-à-vis de la pollution, notamment par la poussière, de l'extrémité de la fibre optique logée en attente dans le raccord femelle. Une protection est également offerte à la fibre optique du câble à raccorder grâce au fait que l'extrémité de la fibre au droit de l'extrémité de l'embout se trouve en retrait par rapport à l'extrémité frontale du manchon. On évite ainsi tout risque d'endommagement de la fibre y compris pendant les opérations de connexion et de déconnexion.

Dans le but de mieux faire comprendre l'invention, on va maintenant décrire des exemples de mise en oeuvre particuliers, nullement limitatifs, en se référant au dessin annexé dans lequel :

- la figure 1 est une vue en coupe d'un premier mode de réalisation de dispositif de connexion selon l'invention,

- la figure 2 est une vue en coupe selon II-II de la figure 1,

- la figure 3 est une vue en coupe selon III-III de la figure 1,

- la figure 4 est une vue en coupe d'un second mode de réalisation de dispositif de connexion selon l'invention,

- la figure 5 est une vue en coupe selon V-V de la figure 4, et

- la figure 6 est une vue de dessus partiellement en coupe d'un exemple de réalisation de boîtier de connexion selon l'invention.

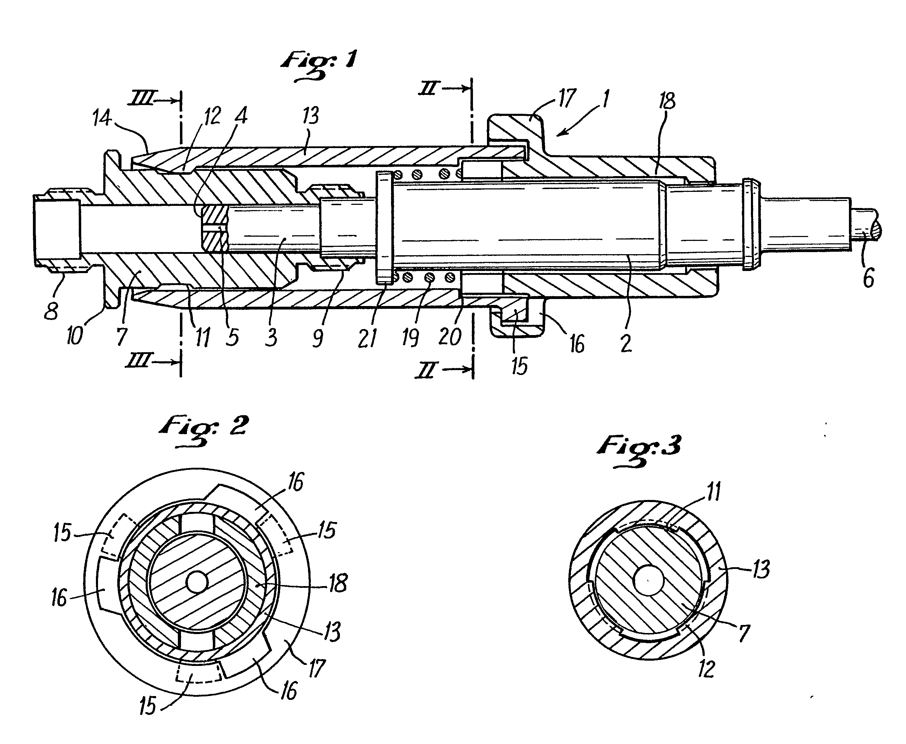

On se réfère tout d'abord aux figures 1 à 3.

Le dispositif de connexion désigné globalement par 1 comporte un embout mâle 2 qui peut être de tout type connu approprié comportant une partie frontale tubulaire 3 au droit de l'extrémité frontale 4 de laquelle se trouve la face d'extrémité d'une fibre optique 5 d'un câble optique 6 à l'extrémité duquel est monté l'embout 2. La fibre optique 5 est immobilisée, de préférence par collage, à l'intérieur de l'embout.

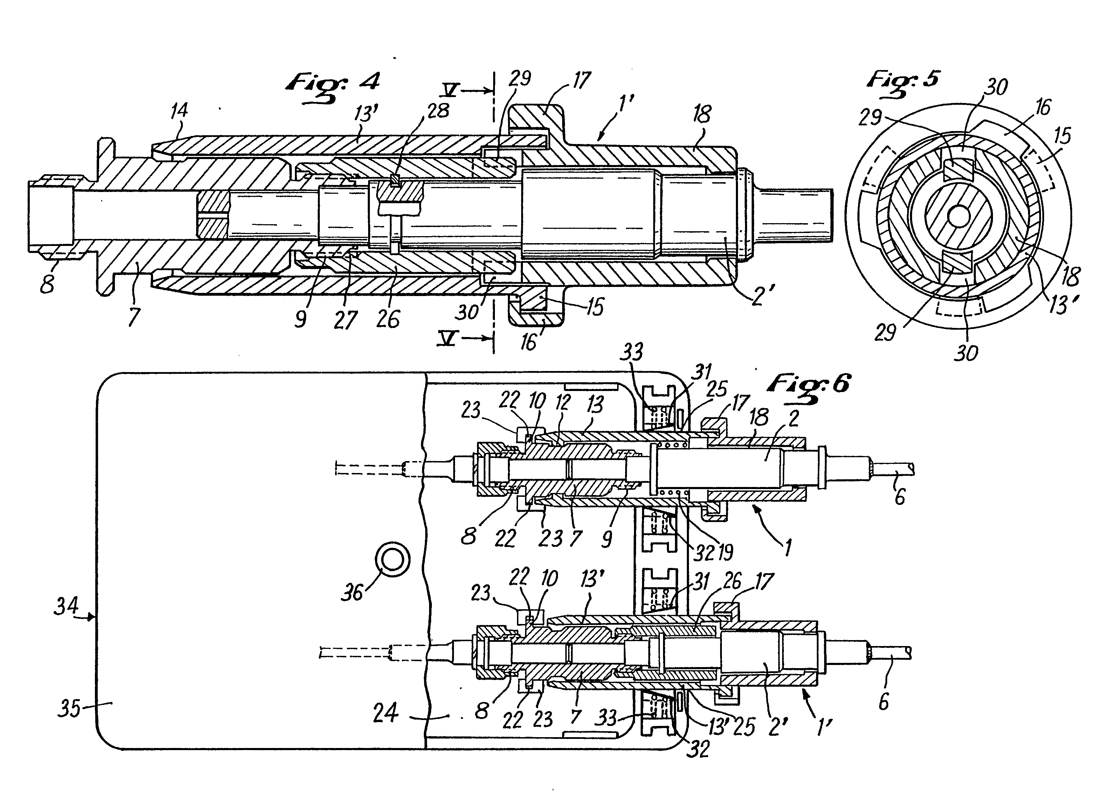

La partie tubulaire 3 de l'embout 2 est engagée en vue de la connexion dans un raccord femelle 7 comportant un évidement central longitudinal, l'extrémité 4 de la partie tubulaire 3 de l'embout étant amenée, dans la position de connexion, sensiblement au milieu de l'évidement du raccord 7 de manière à amener la face d'extrémité de la fibre optique en regard de la face d'extrémité d'une autre fibre optique immobilisée dans un second embout engagé dans le raccord 7 par son autre extrémité. L'autre embout n'est pas illustré à la figure 1 mais on peut notamment le voir à la figure 6, cet embout étant fixé par vissage sur un filetage extérieur ménagé sur une portée cylindrique 8 de diamètre extérieur réduit du raccord, le raccord comportant en outre à son autre extrémité un filetage extérieur réalisé sur une autre portée cylindrique de diamètre réduit 9 dont le rôle sera expliqué plus loin en référence à la figure 4.

Le raccord comporte en outre une bride 10 par exemple de section carrée ou rectangulaire, dont la fonction sera expliquée plus loin.

Le raccord 7 comporte également dans sa paroi périphérique une gorge annulaire 11 pour la réception par encliquetage d'éléments en saillie tels qu'un bourrelet annulaire ou des crans 12 au nombre de trois dans l'exemple illustré équiangulairement répartis à l'intérieur d'un manchon 13 apte à entourer l'embout 2 et le raccord 7.

Le manchon 13 est pourvu d'un chanfrein d'extrémité 14. A son extrémité opposée arrière, le manchon 13 est solidarisé par une liaison à baïonnette 15, 16 à une bride 17 d'un capot tubulaire 18 monté à l'arrière de l'embout 2.

Selon l'invention, le manchon 13 et le capot 18 pourraient être réalisés d'une pièce d'un seul tenant, mais, pour des facilités de montage, le manchon 13 et le capot 18 sont constitués de deux pièces séparées réunies par une liaison séparable telle que celle à baïonnette illustrée.

Dans le mode de réalisation illustré, il est prévu un ressort hélicoïdal de compression 19 disposé entre l'extrémité frontale 20 du capot arrière 18 et une portée d'appui réalisée sous la forme d'une collerette périphérique 21 de l'embout 2.

On va décrire ci-après à titre d'exemple la mise en oeuvre du dispositif ainsi décrit dans un boîtier de connexion illustré à la figure 6, à l'intérieur duquel le raccord femelle 7 est au préalable monté. Comme illustré sur la figure 6 un embout mâle comportant une fibre optique est fixé sur la partie de gauche du raccord 7 de telle manière que l'extrémité de la fibre optique se trouve sensiblement au centre du raccord.

Le raccord 7 est maintenu en une position fixe prédéterminée par engagement de sa bride 10 dans des rainures 22 en regard réalisées dans des montants 23 en saillie de la paroi de fond 24 du boîtier.

Le câble 6 à raccorder a été pourvu à son extrémité d'un embout mâle 2 sur lequel est d'abord mis en place le capot arrière 18 et le ressort 19 puis le manchon 13.

L'ensemble mis en place à l'extrémité du câble constitue une fiche de connexion qui peut être raccordée à la prise que constitue le raccord femelle 7, l'opérateur tenant à cet effet la fiche par le capot arrière 18.

Le raccord femelle 7 se trouve disposé dans le boîtier à une distance prédéterminée d'une ouverture 25 d'une paroi latérale du boîtier au travers de laquelle peut être introduit le manchon 13 du câble jusqu'à ce que ses crans 12 viennent s'engager dans la gorge périphérique 11 du raccord.

Pour déconnecter le câble muni de l'embout 2 par rapport au raccord 7, il suffit d'exercer, en tenant le capot 18, une traction visant à dégager les crans 12 de la gorge de retenue 11.

Le dispositif de connexion selon l'invention illustré à la figure 4 et à la partie inférieure de la figure 6 en étant désigné globalement par 1' comporte un embout 2', un manchon 13', et un capot arrière 18 pourvu d'une bride 17 au niveau de laquelle s'effectue la liaison, en particulier à baïonnette avec le manchon 13' de la même manière que dans le premier mode de réalisation. Le manchon 13' illustré diffère du manchon 13 par l'absence des crans 12.

Dans ce second mode de réalisation, il est prévu en outre un écrou de verrouillage 26 engagé autour de la partie avant de l'embout 2' et apte à être vissé par un filetage intérieur 27 sur le filetage extérieur de la portée cylindrique 9 du raccord 7. L'écrou de verrouillage est maintenu axialement mais libre en rotation par rapport à l'embout au moyen d'un jonc fendu élastique 28.

A son extrémité arrière l'écrou 26 comporte des pattes axiales en saillie 29, par exemple au nombre de deux, diamétralement opposées, s'engageant dans des encoches axiales 30, par exemple au nombre de deux, diamétralement opposées, du capot arrière 18. On réalise ainsi une solidarisation en rotation de l'écrou 26 avec le capot arrière 18 et donc avec le manchon 13' qui est solidarisé avec l'écrou par la liaison à baïonnette 15,16.

Pour la réalisation de la connexion illustrée à la partie inférieure de la figure 6, le raccord 7 muni à son extrémité de gauche d'un embout logeant une fibre optique est mis en place dans le boîtier par sa bride 10 engagée dans les gorges 22 des montants 23 et on engage, en tenant le capot arrière 18, l'extrémité du câble comportant, montés autour de l'embout 2', le capot arrière 18, le manchon 13' et l'écrou de verrouillage 26 à travers un orifice 25 de la paroi latérale du boîtier jusqu'à amener l'extrémité du manchon autour du corps du raccord 7. On effectue alors une rotation du capot 18 de manière à visser l'écrou de verrouillage 26 sur la portée annulaire filetée 9 du raccord.

La déconnexion s'effectue en tenant le capot arrière 18 par dévissage en tournant le capot puis extraction par traction longitudinale sur ledit capot.

Les dispositifs selon l'invention illustrés aux figures 1 et 4 peuvent être utilisés pour raccorder un câble à fibre optique à une prise comportant un raccord femelle et logée dans un boîtier de connexion, comme illustré à la figure 6. Les dispositifs peuvent également être utilisés dans tous les cas où l'on doit raccorder en aveugle un élément de connecteur mâle à un élément de connecteur femelle logé en retrait d'une paroi en regard d'un orifice ménagé dans celle-ci.

En se référant à nouveau à la figure 6, on voit que les orifices 25 dans la paroi latérale du boîtier, comportent chacun une paire de volets obturateurs 31, 32 déplaçables transversalement par rapport à l'axe de déplacement des manchons 13, 13' et rappelés chacun élastiquement par un ressort 33 de la position d'ouverture illustrée à la figure 6 à la position de fermeture où les deux volets 31 et 32 de l'obturateur d'un orifice 25 sont au contact l'un de l'autre.

Comme on le voit sur le dessin, les surfaces frontales des obturateurs sont réalisées en forme de rampe de manière que lors de l'introduction du manchon 13 et respectivement 13' les volets s'écartent à l'encontre des ressorts 33, cet effet d'écartement étant facilité par le chanfrein d'extrémité 14 du manchon.

Le boîtier illustré à la figure 6 désigné globalement par 34 est constitué de la paroi de fond 24 sur laquelle est mis en place un couvercle 35 immobilisé par notamment une vis d'assemblage centrale 36, le boîtier comportant dans une paroi latérale solidaire du fond 24 ou du couvercle 35, deux orifices 25 dans lesquels sont mis en place les dispositifs de connexion 1 et 1′.

Bien entendu, il est possible de prévoir le boîtier pour un nombre et une disposition différents de dispositifs de connexion.

Bien que l'invention ait été décrite en liaison avec des modes de réalisation particuliers, il est bien évident qu'elle n'y est nullement limitée et qu'on peut lui apporter différents variantes et modifications sans pour autant sortir ni de son cadre ni de son esprit. . .

## Revendications

1. Dispositif de connexion de fibre optique comportant un embout mâle dans lequel une fibre optique est immobilisée et un raccord femelle apte à recevoir un autre embout mâle dans lequel une autre fibre optique est immobilisée, caractérisé par le fait qu'il comporte un manchon (13;13′) monté autour de l'embout mâle (2;2′), dépassant axialement de l'extrémité frontale (4) de celui-ci et apte à s'engager autour du raccord femelle (7), des moyens (11,12;9,26,27) étant prévus pour immobiliser en une position axiale prédéterminée le manchon sur le raccord, ledit manchon (13;13′) se prolongeant vers l'extrémité arrière de l'embout (2;2′) par un capot de manoeuvre (8), monté autour de l'embout et solidaire dudit manchon.

2. Dispositif selon la revendication 1, caractérisé par le fait que le manchon (13;13′) et le capot (18) sont solidaires par une liaison séparable, notamment à baïonnette (15,16).

3. Dispositif de connexion selon l'une quelconque des revendications 1 et 2, caractérisé par le fait que les moyens d'immobilisation sont du type à encliquetage, le manchon (13) comportant sur sa paroi intérieure, de préférence au voisinage de son extrémité frontale, des moyens d'accrochage en saillie vers l'intérieur, tels qu'un bourrelet annulaire ou des crans (12) aptes à s'engager dans une gorge (11) ménagée à la périphérie extérieure du raccord.

4. Dispositif selon la revendication 3, caractérisé par le fait qu'il comporte un ressort (19), notamment un ressort hélicoïdal de compression, disposé de manière à repousser l'embout (2) contenant l'extrémité de la fibre optique (5) vers l'intérieur du raccord lorsque le manchon (13) est immobilisé sur ledit raccord (7).

5. Dispositif selon la revendication 4, caractérisé par le fait que le ressort (19) est disposé entre une portée frontale (20) du capot arrière (18) et une collerette périphérique (21) de l'embout.

6. Dispositif selon l'une quelconque des revendications 1 et 2, caractérisé par le fait qu'il comprend pour l'immobilisation axiale du manchon (13′) par rapport au raccord (7) un écrou de verrouillage (26) disposé autour de l'embout (2′) à l'intérieur dudit manchon (13′), ledit écrou étant solidaire en rotation dudit manchon et comportant, de préférence au voisinage de son extrémité frontale, un filetage interne (27) susceptible de coopérer avec un filetage externe réalisé sur une portée cylindrique (9) du raccord.

7. Dispositif selon la revendication 6, caractérisé par le fait que l'écrou de verrouillage (26) comporte à sa partie arrière des pattes axiales (29) aptes à s'engager dans des encoches axiales (30) du capot arrière (18) pour solidariser en rotation l'écrou avec le capot et donc avec le manchon.

8. Boîtier de connexion pour la mise en oeuvre du dispositif selon l'une quelconque des revendications précédentes, caractérisé par le fait qu'il comporte dans une paroi au moins un orifice (25) présentant un diamètre légèrement supérieur au diamètre extérieur du manchon (13;13′) et des moyens (22,23) pour maintenir un raccord femelle (7) dans le boîtier en regard du ou de chaque orifice et à une distance prédéterminée de celui-ci.

9. Boîtier selon la revendication 8, caractérisé par le fait que les moyens de maintien comportent des rainures (22) en regard réalisées dans des montants (23) en saillie d'une paroi de fond (24) du boîtier (34) et dans lesquels est logée une bride (10), notamment de section carrée ou rectangulaire, réalisée sur la paroi extérieure du raccord (7).

10. Boîtier selon l'une quelconque des revendications 8 et 9, caractérisé par le fait qu'il comporte au niveau du ou de chaque orifice (25) des moyens d'obturation (31,32) escamotables lors de l'introduction du manchon (13;13′).

11. Boîtier selon la revendication 10, caractérisé par le fait que les moyens d'obturation sont constitués de deux volets (31,32) mobiles transversalement par appui du manchon (13;13′) depuis une position fermée où les deux volets sont au contact l'un de l'autre vers une position ouverte d'ouverture, les deux volets étant rappelés par des ressorts (33) en direction de leur position fermée.

Fig. 1

Fig. 2

Fig. 3

Fig. 4

Fig. 5

Fig. 6

EP 0 395 491 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 6, no. 13 (P-99)[891], 26 janvier 1982; & JP-A-56 137 322 (TOKYO SHIBAURA DENKI K.K.) 27-10-1981 * En entier * | 1,4 | G 02 B  6/38 |
| A | US-A-4 518 220  (S.E. SWANSON) * En entier * | 1,4 | |
| A | US-A-4 775 327  (R.W. NORMANN) * Figures 1-9; colonne 3, lignes 25-68; colonne 4, lignes 1-68; colonne 5, lignes 1-9 * | 8-10 | |
| A | EP-A-0 223 608  (RAYCHEM CORP.) * Figure 1; page 3, lignes 4-33; page 4, lignes 1-21 * | 1,4 | |
| A | FR-A-1 320 894  (SOCIETE ALSACIENNE) * En entier * | 1 | |

DOMAINES TECHNIQUES
RECHERCHES (Int. Cl.5)

G 02 B  6/00
H 01 R  13/00
H 01 R  31/00

Le présent rapport a été établi pour toutes les revendications

| Lieu de la recherche | Date d'achèvement de la recherche | Examinateur |
|---|---|---|
| LA HAYE | 02-08-1990 | MATHYSSEK K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)